# EUROPÄISCHE PATENTANMELDUNG

(11) **EP 4 388 845 A1**
(43) Veröffentlichungstag der Anmeldung: **26.06.2024**
(21) Anmeldenummer: 23214317.2
(22) Anmeldetag: 05.12.2023
(51) Int. Cl.: A01C 7/20, A01B 63/24

(54) **VERFAHREN ZUR KONFIGURATION EINER LANDWIRTSCHAFTLICHEN VERTEILMASCHINE, KONFIGURATIONSSYSTEM UND LANDWIRTSCHAFTLICHE VERTEILMASCHINE**

(30) Priorität: 19.12.2022 DE 102022133851
(71) Anmelder: Horsch Maschinen GmbH, 92421 Schwandorf (DE)
(72) Erfinder: THOMSEN, Jens, 92421 Schwandorf (DE)
(74) Vertreter: v. Bezold & Partner Patentanwälte - PartG mbB

(57) **Zusammenfassung**

Die Erfindung betrifft ein Verfahren zur Konfiguration einer landwirtschaftlichen Verteilmaschine (200). Im Rahmen des Verfahrens wird eine landwirtschaftliche Verteilmaschine (200) mit zumindest vier, insbesondere zumindest sechs Reiheneinheiten (10), die an einer Trägerkonstruktion (20) angebaut und die zur Ausbringung von landwirtschaftlichen Verteilgut eingerichtet sind, bereitgestellt. Zudem erfolgt eine Vorgabe und Auswahl zumindest eines Konfigurationsmodus der landwirtschaftlichen Verteilmaschine (200), wobei der Konfigurationsmodus durch einen Strichabstand (A1-A5) der Reiheneinheiten (10) zueinander, einer Anzahl von zwischen einer Bodenkontaktposition und einer Nicht-Bodenkontaktposition wechselnden Reiheneinheiten (10) definiert ist. Es erfolgt eine automatisierte und/oder vorzugsweise auf einer Maschinenausgabe basierende, manuelle Anpassung der landwirtschaftlichen Verteilmaschine (200) an den ausgewählten Konfigurationsmodus.

Die Erfindung betrifft zudem ein Konfigurationssystem, sowie eine landwirtschaftliche Verteilmaschine (200).

## Beschreibung

Die Erfindung betrifft ein Verfahren zur Konfiguration einer landwirtschaftlichen Verteilmaschine. Die Erfindung betrifft zudem ein Konfigurationssystem zur Konfiguration einer landwirtschaftlichen Verteilmaschine. Darüber hinaus betrifft die Erfindung eine landwirtschaftliche Verteilmaschine.

Landwirtschaftliche Verteilmaschinen umfassen üblicherweise Reiheneinheiten (z.B. zum Ausbringen von Saatgut, Dünger etc.), wobei Verteilgut aus einem Behälter zu jeweiligen Reiheneinheiten gefördert wird und auf einer landwirtschaftlichen Fläche ausgebracht wird.

Die Reiheneinheiten von Verteilmaschinen, insbesondere zur Einzelkornaussaat, sind üblicherweise in einem bestimmten Strichabstand zueinander angeordnet. Der Strichabstand definiert die Ablageposition von Verteilgut auf der landwirtschaftlichen Fläche, je nach Art des Verteilguts (z.B. Mais, Zuckerrücken etc.) ist ein jeweiliger Strichabstand erforderlich (z.B. 50 Zentimeter oder 80 Zentimeter).

Die EP 1 856 964 A1 zeigt eine derartige Verteilmaschine, mit einer Vielzahl an Reiheneinheiten zum Ausbringen von Verteilgut. Insbesondere ist es möglich, dass die Reiheneinheiten an verschiedenen Stellen quer zur Fahrtrichtung positionierbar sind. Somit kann der Strichabstand zwischen benachbarten Reiheneinheiten quer zu einer Fahrrichtung verändert werden.

Das aus dem Stand der Technik bekannte Dokument zeigt eine landwirtschaftliche Verteilmaschine, mit welcher es möglich ist, Reiheneinheiten quer zu Fahrtrichtung zu verschieben, um einen Strichabstand zwischen den Reiheneinheiten zu ändern. Allerdings ist es nicht möglich, gezielt Reiheneinheiten dauerhaft in eine Nicht-Bodenkontaktposition zu bringen und zusätzlich den Strichabstand zu verändern.

Aufgabe der Erfindung ist es somit, die beschriebenen Nachteile des Standes der Technik zu beseitigen. Insbesondere soll ein Verfahren bereitgestellt werden, mit welchem es möglich ist, den Strichabstand der Reiheneinheiten derartig zu ändern, dass möglichst viele unterschiedliche Verteilgüter mit ein und derselben Verteilmaschine verteilt werden können.

Diese Aufgaben werden gelöst durch ein Verfahren zur Konfiguration einer landwirtschaftlichen Verteilmaschine mit den Merkmalen des unabhängigen Anspruch 1 sowie durch ein Konfigurationssystem mit den Merkmalen des Anspruchs 11 und eine landwirtschaftliche Verteilmaschine mit den Merkmalen des Anspruchs 13. Vorteilhafte Ausführungsformen und Weiterbildungen der Erfindung sind in den Ansprüchen und der folgenden Beschreibung unter teilweiser Bezugnahme auf die Figuren offenbart.

Das erfindungsgemäße Verfahren dient zur Konfiguration einer landwirtschaftlichen Verteilmaschine. Die landwirtschaftliche Verteilmaschine kann insbesondere als eine Sämaschine und/oder Bodenbearbeitungsmaschine ausgebildet sein. Die Verteilmaschine kann vorzugsweise durch ein Zugfahrzeug (Traktor, Wide-Span-Traktor, Gantry-Traktor etc.) gezogen werden.

Das erfindungsgemäße Verfahren umfasst ein Bereitstellen einer landwirtschaftlichen Verteilmaschine mit zumindest vier, insbesondere zumindest sechs Reiheneinheiten, die an einer Trägerkonstruktion angebaut sind und die zur Ausbringung von landwirtschaftlichem Verteilgut eingerichtet sind. Eine Reiheneinheit umfasst vorzugsweise ein Säschar oder ähnliches zum Ausbringen des Verteilguts. Die Trägerkonstruktion kann insbesondere Teil der Verteilmaschine oder Teil eines jeweiligen Seitenflügels der Verteilmaschine sein. Das landwirtschaftliche Verteilgut kann z.B. Saatgut und/oder Dünger umfassen.

Die Reiheneinheiten umfassen vorzugsweise jeweils eine Vereinzelungseinrichtung (z. B. mit einem drehbaren Vereinzelungsorgan, insbesondere einer drehbaren Vereinzelungsscheibe oder einer drehbaren Vereinzelungstrommel) zum Vereinzeln von Verteilgut. Die Reiheneinheiten sind insbesondere zum Ausbringen von zweckmäßig vereinzeltem Verteilgut (z. B. in eine Bodenfurche) ausgebildet. Zum Ausbringen von vereinzeltem Verteilgut können die Reiheneinheiten z. B. jeweils eine Ausgabeleitung umfassen.

Das erfindungsgemäße Verfahren umfasst zudem eine Vorgabe und eine Auswahl zumindest eines Konfigurationsmodus der landwirtschaftlichen Verteilmaschine, wobei der Konfigurationsmodus durch einen Strichabstand der Reiheneinheiten zueinander, einer Anzahl von sich dauerhaft in einer Nicht-Bodenkontaktposition befindenden und einer Anzahl von zwischen einer Bodenkontaktposition und einer Nicht-Bodenkontaktposition wechselnden Reiheneinheiten definiert ist. Die Vorgabe zumindest eines Konfigurationsmodus umfasst vorzugsweise ein Hinterlegen dieses Konfigurationsmodus in einer Steuereinrichtung. Zum Beispiel kann zu bestimmten Arten von Verteilgut ein Konfigurationsmodus hinterlegt sein. Beispielsweise kann ein Konfigurationsmodus Informationen umfassen, wie z.B., dass bei Mais als Verteilgut ein Strichabstand von 75 Zentimetern benötigt wird und/oder z.B., dass Reiheneinheit 3 und Reiheneinheit 6 deaktiviert werden. Somit können beispielsweise auch verschiedene Konfigurationsmodi z.B. zu verschiedenen Verteilgütern und/oder z.B. zu einer vorhandenen Reihenanzahl der Verteilmaschine in einer Steuereinrichtung hinterlegt werden. Insbesondere können sich während eines Arbeitsvorgangs z.B. zwei Reiheneinheiten dauerhaft in der Nicht-Bodenkontaktposition befinden, wenn die Verteilmaschine bspw. acht Reiheneinheiten umfasst, jedoch bspw. nur mit sechs Reiheneinheiten Verteilgut ausgebracht werden soll, diese Informationen können in der Steuereinrichtung hinterlegt sein (z.B. bei einem Strichabstand von 75 Zentimetern können zwei Reiheneinheiten dauerhaft in Nicht-Bodenkontaktposition sein.)

In einem weiteren Schritt des Verfahrens erfolgt eine automatisierte und/oder vorzugsweise auf einer Maschinenausgabe basierende, manuelle Anpassung der landwirtschaftlichen Verteilmaschine an den ausgewählten Konfigurationsmodus. Insbesondere ist es möglich, dass bspw. mittels einer Bedieneinrichtung vorzugsweise ein Konfigurationsmodus ausgewählt werden kann und anhand des ausgewählten Konfigurationsmodus mittels einer Steuereinrichtung Signale zur automatisierten Anpassung (z.B. Ansteuerung einer Stelleinrichtung zum Anpassen der Strichabstände) ausgegeben werden. Es ist auch denkbar, dass die Verteilmaschine, insbesondere die Strichabstände der Reiheneinheiten, manuell angepasst werden, vorzugsweise durch ein händisches Verschieben der Reiheneinheiten. Vorzugsweise ist es möglich, dass der Bediener bspw. auf einer Bedieneinrichtung Anweisungen zur manuellen Anpassung basierend auf einem ausgewählten Konfigurationsmodus erhält.

Auf vorteilhafte Weise wird durch das erfindungsgemäße Verfahren eine Lösung bereitgestellt, mittels welcher der Strichabstand zwischen Reiheneinheiten flexibel eingestellt werden kann, wodurch eine Verteilmaschine zum Ausbringen von verschiedenen Verteilgütern verwendet werden kann. Insbesondere ist es möglich, gezielt Reiheneinheiten zu aktiven oder zu deaktivieren, um Verteilgut auszubringen oder nicht auszubringen, wodurch je nach Arbeitsvorgang eine unterschiedliche Anzahl an Reiheneinheiten verwendet werden kann.

Gemäß einer Ausführungsvariante des Verfahrens kann vorgesehen sein, dass der Schritt der Anpassung des Strichabstands der Reiheneinheiten zueinander ein Verschieben der Reiheneinheiten quer zu einer Fahrtrichtung umfasst. Es ist vorzugsweise möglich, dass zumindest eine Reiheneinheit an der Trägerkonstruktion montiert ist und gegenüber dieser verschiebbar ausgebildet ist. Es ist auch denkbar, dass die Trägerkonstruktion z.B. teleskopierbar ausgebildet ist und das Verschieben zumindest einer Reiheneinheit ein Teleskopieren der Trägerkonstruktion umfasst. Bspw. ist es möglich, dass die Reiheneinheiten am jeweiligen Ende der Trägerkonstruktion verschiebbar sind, durch ein Teleskopieren der Trägerkonstruktion, während z.B. die Reiheneinheiten dazwischen verschiebbar sind, durch eine Verschiebung der Reiheneinheiten gegenüber der Trägerkonstruktion. Vorzugsweise können die Reiheneinheiten manuell durch einen Bediener verschoben werden. Es ist auch möglich, dass die Reiheneinheiten automatisiert verschoben werden (z.B. kann basierend auf der Auswahl des Konfigurationsmodus eine Steuereinrichtung z.B. eine Stelleinrichtung steuern und/oder regeln, insbesondere einen Verschiebeweg der Stelleinrichtung).

Gemäß einer weiteren Ausführungsvariante des Verfahrens kann vorgesehen sein, dass das Verschieben zumindest einer Reiheneinheit mittels einer, durch eine Stelleinrichtung initiierte, Verschiebebewegung unmittelbar oder mittelbar durchführbar ist. Die Stelleinrichtung kann insbesondere durch zumindest einen oder mehrere hydraulisch und/oder elektrisch betriebene Aktor(en) (z.B. Zylinder, Motoren oder dergl.) gebildet sein. Es können z.B. zwei Stelleinrichtungen (z.B. zwei Zylinder), vorzugsweise jeweils am jeweiligen Ende der Trägerkonstruktion, vorhanden sein, um somit bei z.B. sechs Reiheneinheiten je drei Reiheneinheiten mit je einer Stelleinrichtung zu verschieben. Es ist möglich, dass die Stelleinrichtung Teil der Trägerkonstruktion ist. Insbesondere ist es möglich, dass die Stelleinrichtung (z.B. der Verschiebeweg) durch eine Steuereinrichtung gesteuert und/oder geregelt werden kann. Beispielsweise kann je eine Stelleinrichtung zum Verschieben einer Reiheneinheit vorhanden sein (unmittelbares Verschieben einer Reiheneinheit durch eine Stelleinrichtung). Vorzugsweise werden mehrere Reiheneinheiten durch eine Stelleinrichtung verschoben (mittelbares Verschieben mehrerer Reiheneinheiten durch eine Stelleinrichtung).

Gemäß einer weiteren Ausführungsvariante des Verfahrens kann vorgesehen sein, dass eine mittelbare Verschiebebewegung zumindest einer ersten Reiheneinheit durch eine, die erste Reiheneinheit mit einer zweiten Reiheneinheit verbindende, Koppeleinrichtung erreicht wird, wobei mittels der Stelleinrichtung eine Verschiebebewegung der ersten Reiheneinheit und/oder der zweiten Reiheneinheit initiiert wird. Vorzugsweise kann die Koppeleinrichtung z.B. durch Koppelstangen oder ähnliches gebildet sein. Vorzugsweise kann durch die Koppelung ein Strichabstand zwischen den Reiheneinheiten gebildet werden. Es ist möglich, dass durch die Koppelung jeweilige Strichabstände zwischen den Reiheneinheiten erreicht werden, die vorzugsweise gleich groß oder z.B. unterschiedlich groß sind. Vorzugsweise werden mehrere Reiheneinheiten miteinander gekoppelt (z.B. können vier Reiheneinheiten mit drei Koppelstangen gekoppelt und durch eine Stelleinrichtung verschoben werden).

Gemäß einer Weiterbildung des Verfahrens kann vorgesehen sein, dass der Schritt der Anpassung des Strichabstand in einem Abstandsbereich von mindestens 375 Millimetern und von maximal 800 Millimetern erfolgt und/oder in einem festgelegten und/oder festlegbaren Raster, vorzugsweise in Schritten von mindestens 5 Millimetern erfolgt und/oder stufenlos erfolgt. Der Strichabstand definiert insbesondere einen Abstand quer zur Fahrtrichtung mit welchem Reiheneinheiten (z.B. Säschare) entlang der Fahrtrichtung Verteilgut ablegen. Es ist beispielsweise möglich, dass z.B. an den Reiheneinheiten Anschläge vorhanden sind, innerhalb welcher die Strichabstände angepasst werden können. Es können beispielsweise auch Clips oder ähnliches zur Begrenzung und/oder Anpassung der Strichabstände vorgesehen sein. Vorzugsweise können die Strichabstände durch Koppelstangen und Clips verstellt werden. Es ist auch möglich, dass z.B. mittels zumindest eines Linearantriebs die Strichabstände stufenlos verstellt werden können. Es ist z.B. möglich, dass ein Raster zur Anpassung des Strichabstands z.B. 5 Millimeter, 10 Millimeter und/oder 15 Millimeter Stufen umfasst.

Gemäß einer Ausführungsvariante des erfindungsgemäßen Verfahrens umfasst der Schritt der Auswahl eines Konfigurationsmodus eine Eingabe von Parameterwerten mittels einer Bedieneinrichtung.

Zur manuellen Eingabe z.B. einer Auswahl eines Konfigurationsmodus kann die Verteilmaschine, d.h. insbesondere eine Steuereinrichtung der Verteilmaschine, eine Bedieneinrichtung umfassen und/oder mit einer Bedieneinrichtung signalverbunden und/oder verbindbar sein. Die Bedieneinrichtung (z.B. Terminal, mobiles Endgerät und/oder dergl.) kann z.B. auch zur Eingabe oder zum Einlesen von verschiedenen Parameterwerten (z.B. Art des landwirtschaftlichen Verteilguts) eingerichtet sein. Die Bedieneinrichtung, kann zudem eingerichtet sein, eine graphische, optische und/oder haptische Ausgabe durchzuführen, bspw. Anzahl der sich dauerhaft in der Nicht-Bodenkontaktposition befindenden Reiheneinheiten. Im Kontext der Erfindung ist es auch möglich, bspw. gespeicherte Konfigurationsmodi z.B. aus einer Speichereinrichtung mittels der Bedieneinrichtung aufzurufen.

Gemäß einer weiteren Ausführungsvariante des erfindungsgemäßen Verfahrens umfasst die Eingabe von Parameterwerten zumindest eine Eingabe einer Art des auszubringenden landwirtschaftlichen Verteilguts und/oder eine Eingabe eines Strichabstands der Reiheneinheiten und/oder Eingabe der sich dauerhaft in einer Nicht-Bodenkontaktposition befindenden Reiheneinheiten und/oder Eingabe der zwischen der Bodenkontaktposition und der Nicht-Bodenkontaktposition wechselnden Reiheneinheiten und/oder Eingabe einer Art eines nachfolgenden Arbeitsprozesses auf einer landwirtschaftlichen Fläche. Insbesondere ist es möglich, dass die Bedieneinrichtung z.B. verschiedene Konfigurationsmodi zur Auswahl bereitstellt. Vorzugsweise ist es möglich, dass der Bediener z.B. mittels der Bedieneinrichtung die Art des auszubringenden Verteilguts auswählt (z.B. Mais) und anhand des Verteilguts ein bestimmter Konfigurationsmodus vorgegeben wird (z.B. Strichabstand bei Mais von 75 Zentimetern).

Gemäß einer Ausführungsvariante des erfindungsgemäßen Verfahrens erfolgt eine Anpassung von Positionen von zumindest zwei Stützrädern quer zu einer Fahrtrichtung, in Abhängigkeit des jeweiligen Strichabstands der Reiheneinheiten, vorzugsweise derartig, dass ein Abstand zwischen einer Mittelachse zumindest einer Reiheneinheit und einer Mittelachse zumindest eines Stützrades definiert und/oder definierbar ist. Vorzugsweise können die Positionen der Stützräder und die Positionen der Reiheneinheiten derartig aufeinander angepasst sein, dass die Reiheneinheiten quer zur Fahrtrichtung versetzt zu den Stützrädern angeordnet sind.

Gemäß einer Weiterbildung des Verfahrens erfolgt ein Aktivieren und/oder Deaktivieren von jeweiligen Dosierorganen der Reiheneinheiten, basierend auf einer manuellen Auswahl der aktiven und/oder der inaktiven Dosierorgane mittels einer Bedieneinrichtung und/oder basierend auf einer automatisierten Aktivierung und/oder Deaktivierung der Dosierorgane durch eine Steuerung und/oder Regelung einer Rotationsgeschwindigkeit der Dosierorgane mittels einer Steuereinrichtung und/oder basierend auf einer Bodenkontaktposition und/oder einer Nicht-Bodenkontaktposition. Vorzugsweise ist es möglich, dass der Bediener z.B. mittels der Bedieneinrichtung beispielsweise die jeweiligen Reiheneinheiten auswählt, welche das Verteilgut während eines Arbeitsvorgangs ausbringen sollen. Eine Steuereinrichtung kann eingerichtet sein, basierend auf dieser Auswahl des Bedieners automatisch die Rotationsgeschwindigkeit der Dosierorgane steuern und/oder regeln (d.h. somit auch die Dosierorgane aktivieren und/oder deaktivieren). Es ist auch eine manuelle Aktivierung und/oder Deaktivierung der Dosierorgane durch den Bediener (z.B. mittels der Bedieneinrichtung) möglich. Es ist auch möglich, dass die Dosierorgane basierend auf einem ausgewählten Konfigurationsmodus automatisiert aktiviert und/oder deaktiviert werden.

Gemäß einer Weiterbildung des Verfahrens erfolgt ein Wechseln einer Position zumindest einer Reiheneinheit zwischen einer Bodenkontaktposition und einer Nicht-Bodenkontaktposition durch ein Verschwenken der Reiheneinheiten gegenüber der Trägerkonstruktion mittels zumindest einem Zylinder. Vorzugsweise ist es möglich, dass mittels einer Steuereinrichtung die Bewegung des Zylinders gesteuert und/oder geregelt wird (z.B. anhand einer Position der Verteilmaschine).

Beispielsweise ist je ein Zylinder pro Reiheneinheit vorgesehen. Vorzugsweise umfasst der Zylinder einen Hydraulikzylinder.

Insbesondere kann zumindest eine Reiheneinheit dauerhaft in einer Nicht-Bodenkontaktposition sein, vorzugsweise wird dies durch den Zylinder erreicht. Vorzugsweise kann ein Bediener z.B. einen Absperrhahn betätigen, um Reiheneinheiten mit z.B. einem Hydraulikzylinder dauerhaft in Nicht-Bodenkontaktposition zu halten. Es ist alternativ oder ergänzend möglich, dass beispielsweise ein Ventil oder z.B. Bolzen vorhanden sind, welche Betätigt werden können, sodass die Reiheneinheiten dauerhaft in Nicht-Bodenkontaktposition gehalten werden.

Im Kontext der Erfindung können die jeweiligen Schritte des Verfahrens in einer festgelegten Abfolge ausgeführt werden, wobei es optional jedoch auch denkbar ist, dass die Schritte des Verfahrens in einer beliebigen Abfolge durchgeführt werden können. Auch ein beliebiger Wechsel zwischen den Verfahrensschritten ist denkbar. Zudem ist auch eine Ergänzung des Verfahrens um weiteres Verfahrensschritte denkbar.

Bevorzugt werden die Schritte des Verfahrens kontinuierlich ausgeführt und/oder interwallweise ausgeführt.

Die Steuereinrichtung weist bspw. eine Rechnereinheit, einen Bordcomputer und/oder dergl. auf und umfasst zudem einen Steuer- und/oder Regelkreis, insbesondere einen hydraulischen und/oder pneumatischen und/oder elektrischen Steuer- und/oder Regelkreis, wobei der Steuer- und/oder Regelkreis zweckmäßig zur hydraulischen und/oder pneumatischen und/oder elektrischen Signal- und/oder Befehlsübertragung ausgebildet ist. Welche Signal- und/oder Befehlsübertragung auch drahtlos (z.B. mittels WLAN) erfolgen kann.

Im Kontext der Erfindung umfasst der Begriff der Steuereinrichtung, insbesondere die Gesamtheit der Bauteile zur Signal- und/oder Befehlsübertragung. Dementsprechend auch Rechnereinheiten, CPU's und/oder dergl. Ebenso umfasst sind entsprechend auch in den jeweiligen Sensoren oder Sensoreinheiten oder Sensoranordnungen integrierte Steuereinrichtungen. Ebenso sei darauf hingewiesen, dass die Signale und/oder Daten der Sensoren / Messeinrichtungen / Erfassungseinrichtungen und/oder dergl. jeweils als Rückkoppelung für eine Steuer- und/oder Regelgröße herangezogen werden können.

Es sei noch darauf hingewiesen, dass die Begriffe "Steuern" und "Regeln" und "Steuereinrichtung" sich auf elektronische und/oder pneumatische und/oder hydraulische Steuerungen oder Regelungen beziehen können, die je nach Ausbildung Steuerungsaufgaben und/oder Regelungsaufgaben übernehmen können. Auch wenn hierin der Begriff "Steuern" verwendet wird, kann damit gleichsam zweckmäßig auch "Regeln" umfasst sein. Ebenso kann bei Verwendung des Begriffs "Regeln" gleichsam auch ein "Steuern" damit umfasst sein.

Zur Vermeidung von Wiederholungen sei darauf hingewiesen, dass die erfindungsgemäßen Ausführungsformen und Merkmale in beliebiger Weise und Frei mit dem Verfahren und/oder dem Konfigurationssystem und/oder der landwirtschaftlichen Verteilmaschine kombinierbar sind. Dementsprechend sind alle Ausführungsformen und erfindungsgemäßen Merkmale sowohl für die Vorrichtung als auch für das Verfahren offenbart und beanspruchbar.

Die Erfindung umfasst zur Lösung der Aufgabe zudem ein Konfigurationssystem zur Konfiguration einer landwirtschaftlichen Verteilmaschine, welche zumindest vier, insbesondere sechs Reiheneinheiten aufweist, die an einer Trägerkonstruktion angebaut und die zur Ausbringung von landwirtschaftlichen Verteilgut ausgerichtet sind.

Erfindungsgemäß ist das Konfigurationssystem eingerichtet, zur Vorgabe und Auswahl zumindest eines Konfigurationsmodus der landwirtschaftlichen Verteilmaschine, wobei der Konfigurationsmodus durch einen Strichabstand der Reiheneinheiten zueinander, einer Anzahl von sich dauerhaft in einer Nicht-Bodenkontaktposition befindenden und einer Anzahl von zwischen einer Bodenkontaktposition und einer Nicht-Bodenkontaktposition wechselnden Reiheneinheiten definiert ist.

Erfindungsgemäß ist das Konfigurationssystem eingerichtet, basierend auf einem ausgewählten Konfigurationsmodus eine automatisierte und/oder vorzugsweise auf einer Maschinenausgabe basierende manuelle, Anpassung der landwirtschaftlichen Verteilmaschine vorzunehmen.

Die Erfindung beansprucht nicht nur Schutz für das vorstehend beschriebene erfindungsgemäße Verfahren und das erfindungsgemäße Konfigurationssystem. Vielmehr beansprucht die Erfindung auch Schutz für eine landwirtschaftliche Verteilmaschine, welche dazu eingerichtet ist, ein Verfahren gemäß den vorgenannten Ausführungsbeispielen auszuführen und/oder welche ein Konfigurationssystem gemäß der vorgenannten Ausführungsbeispiele umfasst.

Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:
- Figur 1a & 1b: eine Perspektivansicht auf eine landwirtschaftlichen Verteilmaschine mit Reiheneinheiten,
- Figur 2a & 2b: eine Rückansicht der Reiheneinheiten der landwirtschaftlichen Verteilmaschine gemäß Figur 1a und Figur 1b in Nicht-Bodenkontaktposition und in Bodenkontaktposition,
- Figur 3: eine Detailansicht der Reiheneinheiten und der Trägerkonstruktion der landwirtschaftlichen Verteilmaschine.

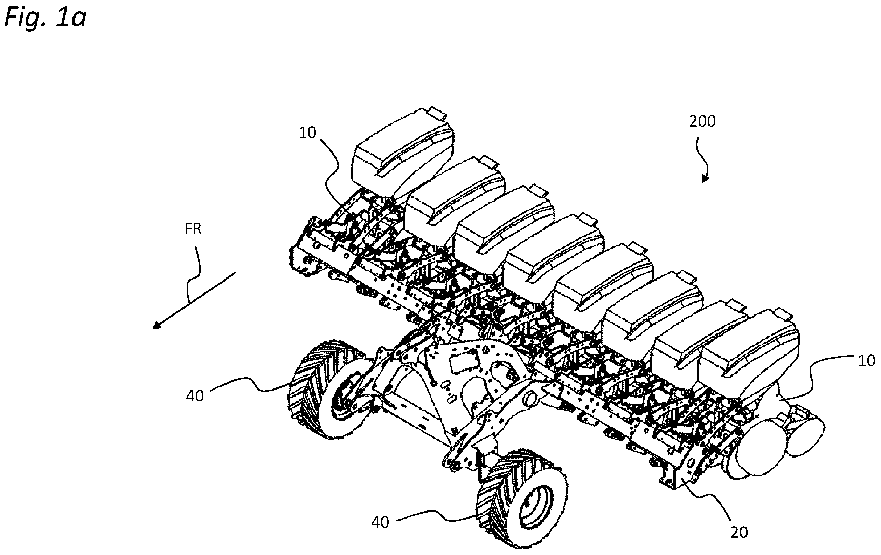

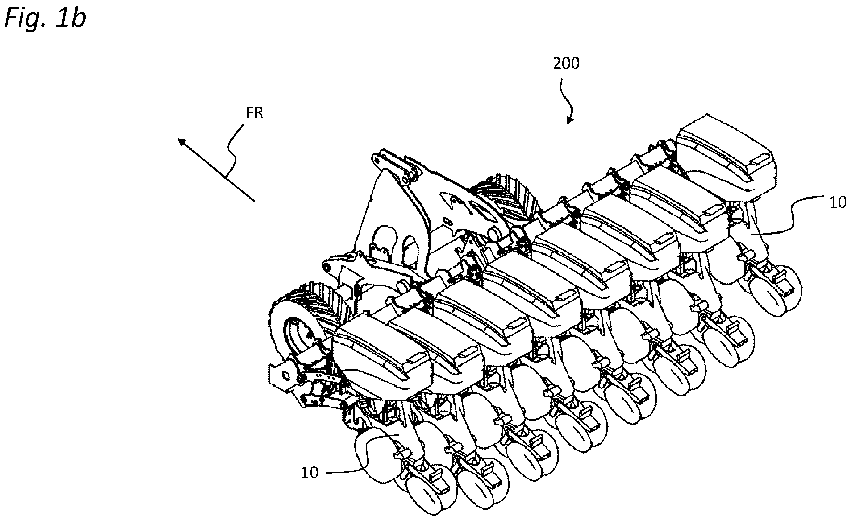

Die in den Figuren 1 bis 3 gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

Figur 1 zeigt eine Perspektivansicht auf eine landwirtschaftliche Verteilmaschine 200 mit Reiheneinheiten 10.

Gemäß dem Ausführungsbeispiel ist die landwirtschaftliche Verteilmaschine 200 als gezogene Maschine ausgebildet und eingerichtet, mittels einem Zugfahrzeug (z.B. Traktor, Wide-Span-Traktor, Gantry-Traktor oder ähnliches) gezogen zu werden.

Die landwirtschaftliche Verteilmaschine 200 umfasst zumindest vier, insbesondere sechs Reiheneinheiten 10, die an einer Trägerkonstruktion 20 angebaut und die zur Ausbringung von landwirtschaftlichen Verteilgut eingerichtet sind. Gemäß dem Ausführungsbeispiel sind acht Reiheneinheiten 10 an der Trägerkonstruktion 20 angebracht.

Zumindest ein Konfigurationsmodus kann der landwirtschaftlichen Verteilmaschine 200 vorgegeben und ausgewählt werden, wobei der Konfigurationsmodus durch einen Strichabstand A1-A5 der Reiheneinheiten 10 zueinander, einer Anzahl von sich dauerhaft in einer Nicht-Bodenkontaktposition befindenden und einer Anzahl von zwischen einer Bodenkontaktposition und einer Nicht-Bodenkontaktposition wechselnden Reiheneinheiten 10 definiert ist.

Die landwirtschaftliche Verteilmaschine 200 kann automatisiert und/oder vorzugsweise auf einer Maschinenausgabe basierend, manuell an den ausgewählten Konfigurationsmodus angepasst werden.

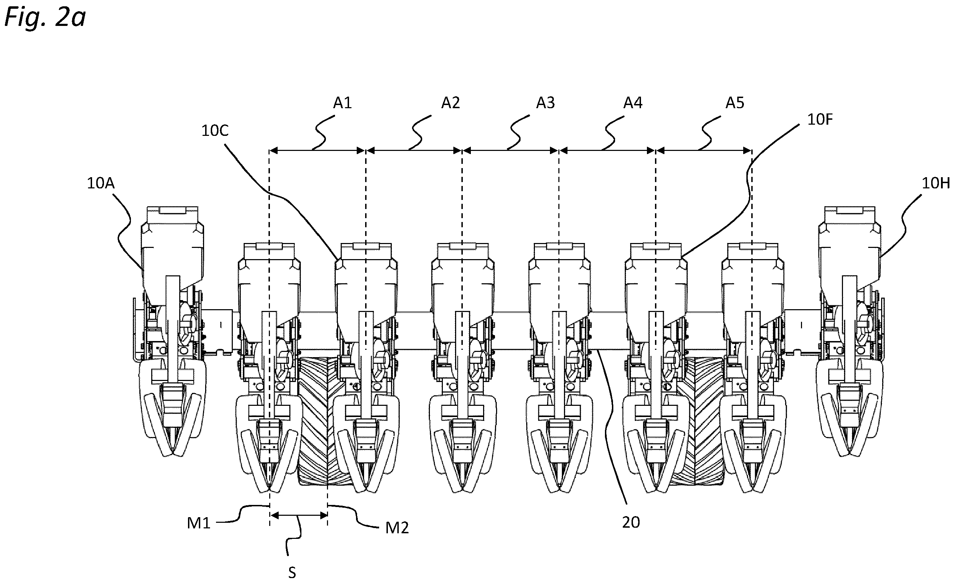

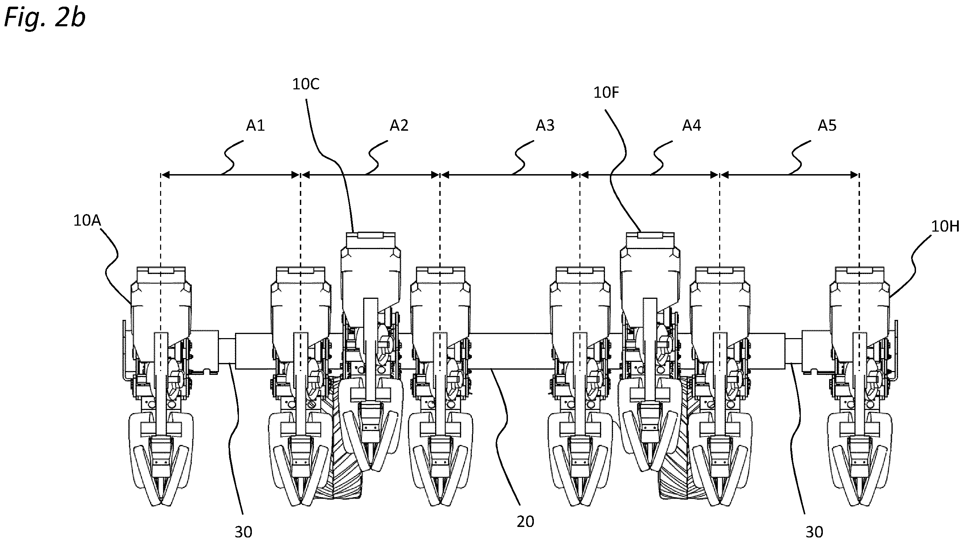

Figur 2 a und 2b zeigen eine Rückansicht der Reiheneinheiten 10 der landwirtschaftlichen Verteilmaschine 200 in Nicht-Bodenkontaktposition und in Bodenkontaktposition. Gemäß den Ausführungsbeispiel aus Fig. 2a sind die mittleren sechs Reiheneinheiten 10B-10G in Bodenkontaktposition und die äußeren zwei Reiheneinheiten 10A; 10H dauerhaft in der Nichtbodenkontaktposition. In Fig. 2b ist die dritte Reiheneinheit 10C und die sechste Reiheneinheit 10F dauerhaft in der Nichtbodenkontaktposition, während die restlichen Reiheneinheiten 10A; 10B; 10D; 10E; 10G; 10H in der Bodenkontaktposition sind.

Die Strichabstände A1-A5 der Reiheneinheiten 10 der Verteilmaschine 200 sind gemäß dem Ausführungsbeispiel gleich groß. Die Reiheneinheiten 10 in Bodenkontaktposition können während des Betriebs der Verteilmaschine 200 Verteilgut ausbringen. Die Reiheneinheiten 10, welche dauerhaft in Nichtbodenkontaktposition sind, können kein Verteilgut ausbringen und sind somit inaktiv.

Der Schritt der Anpassung des Strichabstands A1-A5 der Reiheneinheiten 10 zueinander umfasst ein Verschieben der Reiheneinheiten 10 quer zu einer Fahrtrichtung FR. Gemäß dem Ausführungsbeispiel aus Fig. 2a wurden die Reiheneinheiten 10A-10H derartig verschoben, dass die Reiheneinheiten 10B-10G einen Reihenabstand von 50 Zentimetern aufweisen. In Fig. 2b wurden die alle Reiheneinheiten 10A-10H derartig verschoben, dass die Reiheneinheiten 10A; 10B; 10D; 10E; 10G, 10H einen Strichabstand von 75 Zentimeter aufweisen.

Das Verschieben zumindest einer Reiheneinheit 10 ist mittels einer, durch eine Stelleinrichtung 30 initiierte, Verschiebebewegung unmittelbar oder mittelbar durchführbar. Gemäß den Figuren 2a und 2b werden die äußeren Reiheneinheiten 10 unmittelbar mittels der Stelleinrichtung 30 verschoben.

Die Verteilmaschine 200 umfasst gemäß dem Ausführungsbeispiel zwei Stelleinrichtungen 30, die Teil der Trägerkonstruktion 20 sind. Die Trägerkonstruktion 20 ist an beiden Enden teleskopierbar ausgebildet, wodurch eine Verschiebung der äußeren Reiheneinheiten 10A; 10H unmittelbar mittels einer Stelleinrichtung 30 erfolgen kann.

Eine mittelbare Verschiebebewegung zumindest einer ersten Reiheneinheit 10A wird durch eine, die erste Reiheneinheit 10A mit der zweiten Reiheneinheit 10B verbindende, Koppeleinrichtung 40 erreicht, wobei mittels der Stelleinrichtung 30 eine Verschiebebewegung der ersten Reiheneinheit 10A und/oder der zweiten Reiheneinheit 10B initiiert wird. Gemäß dem Ausführungsbeispiel können z.B. die mittleren Reiheneinheiten 10B-10G mittelbar verschoben werden, möglich wird das durch eine Koppelung der mittleren Reiheneinheiten 10B-10G mit den äußeren Reiheneinheiten 10A; 10H welche teleskopierbar durch die Stelleinrichtungen 30 sind.

Der Schritt der Auswahl eines Konfigurationsmodus umfasst eine Eingabe von Parameterwerten mittels einer Bedieneinrichtung.

Die Eingabe von Parameterwerten umfasst zumindest eine Eingabe einer Art des auszubringenden landwirtschaftlichen Verteilguts und/oder eine Eingabe eines Strichabstands der Reiheneinheiten 10 und/oder eine Eingabe der sich dauerhaft in einer Nicht-Bodenkontaktposition befindenden Reiheneinheiten 10 und/oder eine Eingabe der zwischen der Bodenkontaktposition und der Nicht-Bodenkontaktposition wechselnden Reiheneinheiten 10 und/oder eine Eingabe einer Art eines nachfolgenden Arbeitsprozesses auf einer landwirtschaftlichen Fläche. Gemäß Fig. 2a wurden z.B. Zuckerrüben als Verteilgut ausgewählt, dementsprechend wurden sechs Reiheneinheiten 10 mit einem Strichabstand von vorzugsweise 50 Zentimetern in Bodenkontaktposition gebracht. Gemäß Figur 2b wurde z.B. Mais als Verteilgut ausgewählt, dementsprechend wurden sechs Reiheneinheiten 10 mit einem Strichabstand von vorzugsweise 75 Zentimetern in Bodenkontaktposition gebracht.

Eine Anpassung von Positionen von zumindest zwei Stützrädern 50 quer zur Fahrtrichtung FR erfolgt in Abhängigkeit des jeweiligen Strichabstands A1-A5 der Reiheneinheiten 10, vorzugsweise dass ein Abstand S zwischen einer Mittelachse M1 zumindest einer Reiheneinheit 10 und einer Mittelachse M2 zumindest eines Stützrades 50 definiert und/oder definierbar ist.

Ein Aktivieren und/oder Deaktivieren von jeweiligen Dosierorganen der Reiheneinheiten 10 erfolgt basierend auf einer manuellen Auswahl der aktiven und/oder inaktiven Dosierorgane mittels einer Bedieneinrichtung und/oder basierend auf einer automatisierten Aktivierung und/oder Deaktivierung der Dosierorgane durch eine Steuerung und/oder Regelung einer Rotationsgeschwindigkeit der Dosierorgane mittels einer Steuereinrichtung und/oder basierend auf einer Bodenkontaktposition und/oder einer Nicht-Bodenkontaktposition. Gemäß dem Ausführungsbeispiel aus Fig. 2a werden die Dosierorgane der Reiheneinheit 10A und der Reiheneinheit 10H deaktiviert, während die anderen Dosierorgane der Reiheneinheiten 10B-10G aktiviert werden. Gemäß Fig. 2b werden die Dosierorgane der Reiheneinheit 10C und der Reiheneinheit 10F deaktiviert, während die Dosierorgane der Reiheneinheiten 10A; 10B; 10D; 10E; 10G; 10H aktiviert werden.

Ein Wechseln einer Position zumindest einer Reiheneinheit 10 zwischen einer Bodenkontaktposition und einer Nicht-Bodenkontaktposition erfolgt durch ein Verschwenken der Reiheneinheit 10 gegenüber der Trägerkonstruktion mittels zumindest einem Zylinder. Gemäß den Ausführungsbeispiel aus Fig. 2a wurden die Reiheneinheiten 10A; 10H vorzugsweise durch jeweils einen Zylinder in Nicht-Bodenkontaktposition verschwenkt. In Fig. 2b wurden die Reiheneinheiten 10C; 10F vorzugsweise durch jeweils einen Zylinder in Nicht-Bodenkontaktposition verschwenkt.

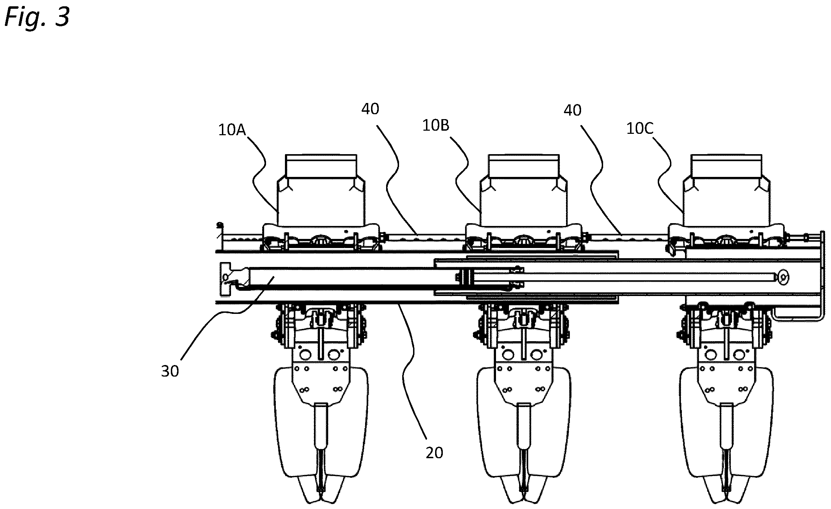

Figur 3 zeigt eine Detailansicht der Reiheneinheiten 10 und der Trägerkonstruktion 20.

Der Schritt der Anpassung des Strichabstands A1-A5 erfolgt in einem Abstandsbereich von mindestens 375 Millimetern und von maximal 800 Millimetern und/oder in einem festgelegten und/oder festlegbaren Raster, vorzugsweise in Schritten von mindestens 5 Millimetern, und/oder stufenlos. Gemäß dem Ausführungsbeispiel erfolgt die Anpassung in einem Raster von mindestens 5 Millimeterschritten.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste:

| | | |
|---|---|---|
| 10 | Reiheneinheit A1-A5 | Strichabstand |
| 20 | Trägerkonstruktion FR | Fahrtrichtung |
| 30 | Stelleinrichtung M1, M2 | Mittelachse |
| 40 | Koppeleinrichtung S | Abstand |
| 50 | Stützräder | |
| 200 | Landwirtschaftliche Verteilmaschine | |

## Patentansprüche

1. Verfahren zur Konfiguration einer landwirtschaftlichen Verteilmaschine (200), umfassend:
- Bereitstellen einer landwirtschaftlichen Verteilmaschine (200) mit zumindest vier, insbesondere zumindest sechs Reiheneinheiten (10), die an einer Trägerkonstruktion (20) angebaut und die zur Ausbringung von landwirtschaftlichem Verteilgut eingerichtet sind,
- Vorgabe und Auswahl zumindest eines Konfigurationsmodus der landwirtschaftlichen Verteilmaschine (200), wobei der Konfigurationsmodus durch einen Strichabstand (A1-A5) der Reiheneinheiten (10) zueinander, einer Anzahl von sich dauerhaft in einer Nicht-Bodenkontaktposition befindenden und einer Anzahl von zwischen einer Bodenkontaktposition und einer Nicht-Bodenkontaktposition wechselnden Reiheneinheiten (10) definiert ist,
**gekennzeichnet durch**, eine automatisierte und/oder vorzugsweise auf einer Maschinenausgabe basierende, manuelle Anpassung der landwirtschaftlichen Verteilmaschine (200) an den ausgewählten Konfigurationsmodus.

2. Verfahren nach einem der vorhergehenden Ansprüche, **dadurch gekennzeichnet, dass** der Schritt der Anpassung des Strichabstands (A1-A5) der Reiheneinheiten (10) zueinander ein Verschieben zumindest einer Reiheneinheit (10) quer zu einer Fahrtrichtung (FR) umfasst.

3. Verfahren nach Anspruch 2, **dadurch gekennzeichnet, dass** das Verschieben zumindest einer Reiheneinheit (10) mittels einer, durch eine Stelleinrichtung (30) initiierte, Verschiebebewegung (30) unmittelbar oder mittelbar durchführbar ist.

4. Verfahren nach Anspruch 3, **dadurch gekennzeichnet, dass** eine mittelbare Verschiebebewegung zumindest einer ersten Reiheneinheit (10A) durch eine, die erste Reiheneinheit (10A) mit einer zweiten Reiheneinheit (10B) verbindende, Koppeleinrichtung (40) erreicht wird, wobei mittels der Stelleinrichtung (30) eine Verschiebebewegung der ersten Reiheneinheit (10A) und/oder der zweiten Reiheneinheit (10B) initiiert wird.

5. Verfahren nach einem der vorhergehenden Ansprüche, **dadurch gekennzeichnet, dass** der Schritt der Anpassung des Strichabstands (A1-A5) in einem Abstandsbereich von mindestens 375 Millimetern und von maximal 800 Millimetern erfolgt und/oder in einem festgelegten und/oder festlegbaren Raster, vorzugsweise in Schritten von mindestens 5 Millimetern, und/oder stufenlos erfolgt.

6. Verfahren nach einem der vorhergehenden Ansprüche, **dadurch gekennzeichnet, dass** der Schritt der Auswahl eines Konfigurationsmodus eine Eingabe von Parameterwerten mittels einer Bedieneinrichtung umfasst.

7. Verfahren nach Anspruch 6, **dadurch gekennzeichnet, dass** die Eingabe von Parameterwerten zumindest eines von folgendem umfasst:
- eine Eingabe einer Art des auszubringenden landwirtschaftlichen Verteilguts und/oder
- eine Eingabe eines Strichabstands (A1-A5) der Reiheneinheiten (10) und/oder
- eine Eingabe der sich dauerhaft in einer Nicht-Bodenkontaktposition befindenden Reiheneinheiten (10) und/oder
- eine Eingabe der zwischen der Bodenkontaktposition und der Nicht-Bodenkontaktposition wechselnden Reiheneinheiten (10) und/oder
- eine Eingabe einer Art eines nachfolgenden Arbeitsprozesses auf einer landwirtschaftlichen Fläche.

8. Verfahren nach einem der vorhergehenden Ansprüche, **gekennzeichnet durch**, eine Anpassung von Positionen von zumindest zwei Stützrädern (50) quer zu einer Fahrtrichtung (FR), in Abhängigkeit des jeweiligen Strichabstands (A1-A5) der Reiheneinheiten (10), vorzugsweise derartig, dass ein Abstand (S) zwischen einer Mittelachse (M1) zumindest einer Reiheneinheit (10) und einer Mittelachse (M2) zumindest eines Stützrades (50) definiert und/oder definierbar ist.

9. Verfahren nach einem der vorhergehenden Ansprüche, **gekennzeichnet durch**, ein Aktivieren und/oder Deaktivieren von jeweiligen Dosierorganen der Reiheneinheiten (10) basierend auf zumindest einem von folgendem:
- einer manuellen Auswahl der aktiven und/oder inaktiven Dosierorgane mittels einer Bedieneinrichtung und/oder
- einer automatisierten Aktivierung und/oder Deaktivierung der Dosierorgane durch eine Steuerung und/oder Regelung einer Rotationsgeschwindigkeit der Dosierorgane mittels einer Steuereinrichtung und/oder basierend auf einer Bodenkontaktposition und/oder einer Nicht-Bodenkontaktposition.

10. Verfahren nach einem der vorhergehenden Ansprüche, **gekennzeichnet durch** ein Wechseln einer Position zwischen einer Bodenkontaktposition und einer Nicht-Bodenkontaktposition durch ein Verschwenken der Reiheneinheit (10) gegenüber der Trägerkonstruktion (20) mittels zumindest einem Zylinder.

11. Konfigurationssystem zur Konfiguration einer landwirtschaftlichen Verteilmaschine (200), welche zumindest vier, insbesondere sechs Reiheneinheiten (10) aufweist, die an einer Trägerkonstruktion (20) angebaut sind und die zur Ausbringung von landwirtschaftlichen Verteilgut eingerichtet sind, wobei das Konfigurationssystem eingerichtet ist, zur Vorgabe und Auswahl zumindest eines Konfigurationsmodus der landwirtschaftlichen Verteilmaschine (200), wobei der Konfigurationsmodus durch einen Strichabstand (A1-A5) der Reiheneinheiten (10) zueinander, einer Anzahl von sich dauerhaft in einer Nicht-Bodenkontaktposition befindenden und einer Anzahl von zwischen einer Bodenkontaktposition und einer Nicht-Bodenkontaktposition wechselnden Reiheneinheiten (10) definiert ist, **dadurch gekennzeichnet, dass** das Konfigurationssystem eingerichtet ist, basierend auf einem ausgewählten Konfigurationsmodus eine automatisierte und/oder vorzugsweise auf einer Maschinenausgabe basierende manuelle, Anpassung der landwirtschaftlichen Verteilmaschine (200) vorzunehmen.

12. Konfigurationssystem nach Anspruch 11, **dadurch gekennzeichnet, dass** das Konfigurationssystem eingerichtet ist, ein Verfahren nach zumindest einem der Ansprüche 1 bis 10 auszuführen.

13. Landwirtschaftliche Verteilmaschine (200) zum Ausbringen von landwirtschaftlichen Verteilgut, welche eingerichtet ist ein Verfahren nach zumindest einem der Ansprüche 1 bis 10 auszuführen und/oder ein Konfigurationssystem nach zumindest einen der Ansprüche 11 bis 12 umfasst.
